# DEMANDE DE BREVET EUROPEEN

(11) **EP 1 955 595 A1**
(43) Date de publication de la demande: **13.08.2008**
(21) Numéro de dépôt: 08370003.9
(22) Date de dépôt: 08.02.2008
(51) Int. Cl.: A21B 3/13, A21D 13/00

(54) **Moule de cuisson, prévu pour la fabrication de produits de pâtisserie, tels que des choux**

(30) Priorité: 12.02.2007 FR 0700981
(71) Demandeur: Christophe, Frédéric, 62370 Guemps (FR)
(72) Inventeur: Christophe, Frédéric, 62370 Guemps (FR)
(74) Mandataire: Duthoit, Michel Georges André

(57) **Abrégé**

L'invention est relative à un moule de cuisson, prévu pour la fabrication de produits de pâtisserie, tels que particulièrement des choux, notamment dans le domaine du prêt à garnir, de forme déterminée, et par exemple de profil carré, triangulaire, hexagonal ou autres.

Selon l'invention, le moule (1) présente au moins une paroi de fond (2) et au moins une paroi latérale (3 ; 3₁, 3₂, 3₃), les parois dudit moule (1) définissant au moins une forme (4) pour le produit de pâtisserie, et dans lequel au moins unedite paroi latérale (3 ; 3₁, 3₂, 3₃) est ajourée de telle façon à favoriser, d'une part, une bonne transmission interne de la chaleur, et d'autre part, l'évacuation des vapeurs et gaz de cuisson.

## Description

L'invention concerne un moule de cuisson, prévu pour la fabrication de produits de pâtisserie, tels que particulièrement des choux.

L'invention trouvera une application dans le domaine du prêt à garnir, salé ou sucré, pour la fabrication de produits de pâtisserie, notamment de choux, de forme déterminée. Ces choux sont utilisés généralement pour l'élaboration d'entremets et de desserts, remplis d'une préparation de garnissage, notamment à l'aide d'une poche.

Pour les entremets, la préparation peut être une farce à base de viande, de poisson, de légumes ou de champignons, notamment épicée, généralement liée par une sauce. Pour les desserts, la préparation peut être simplement de la crème pâtissière, par exemple pour l'élaboration de choux à la crème et la fabrication de pièces montées.

Dans les deux cas, la fabrication actuelle des choux est simplement effectuée en déposant des doses de pâte à choux sur une plaque de cuisson. Cette plaque est ensuite placée dans un four préchauffé : sous la température, la pâte s'élève en prenant une forme non définie, grossièrement sphérique jusqu'à obtention des choux.

Le but de la présente invention est de proposer un moule de cuisson, prévu pour la fabrication de produits de pâtisserie, tels que particulièrement des choux, permettant de donner aux choux une forme déterminée, par exemple de profil carré, triangulaire, hexagonal ou autres.

Un autre but de l'invention est de proposer un moule, permettant une cuisson rapide des produits de pâtisserie, notamment des choux.

Un autre but de l'invention est de proposer un moule à faible coût, de fabrication aisée.

Un autre but de l'invention est de proposer un moule, permettant le démoulage rapide des produits de pâtisserie.

Un autre but de l'invention est de proposer un kit de moulage permettant la réalisation d'un moule conforme à l'invention en combinaison avec des plaques de cuisson traditionnelles.

D'autres buts et avantages de la présente invention apparaîtront au cours de la description qui va suivre, qui n'est donnée qu'à titre indicatif et qui n'a pas pour but de la limiter.

L'invention concerne un moule de cuisson, prévu pour la fabrication de produits de pâtisserie, tels que particulièrement des choux, notamment dans le domaine du prêt à garnir, de forme déterminée et par exemple, de profil carré, triangulaire, hexagonal ou autres.

Selon l'invention, le moule présente au moins une paroi de fond et au moins une paroi latérale, lesdites parois du moule définissant au moins une forme pour le produit de pâtisserie, et dans lequel au moins unedite paroi latérale est ajourée de telle façon à favoriser, d'une part, une bonne transmission interne de la chaleur, et d'autre part, l'évacuation des vapeurs et gaz de cuisson.

L'invention sera mieux comprise à la lecture de la description suivante, accompagnée des dessins en annexe parmi lesquels :
- la figure 1 est une vue en perspective d'un moule conforme à l'invention selon un premier mode de réalisation, notamment de forme hexagonale,
- la figure 2 est une vue en perspective d'un moule conforme à l'invention selon un second mode de réalisation, et notamment de forme carrée,
- la figure 3 est une vue partielle d'un moule conforme à l'invention selon un troisième mode de réalisation, multiforme triangulaire,
- la figure 4 est une vue de dessus du moule tel qu'illustré à la figure 3,
- la figure 4a est une vue en perspective d'un élément d'assemblage des parois latérales du moule tel qu'illustré à la figure 3,
- la figure 5 est une vue de l'une des parois latérales d'un moule conforme à l'invention selon un quatrième mode de réalisation, multiforme hexagonal,
- la figure 6 est une vue de dessus d'un moule résultant de l'assemblage de deux parois telles qu'illustrées à la figure 5,
- la figure 6a est une vue en perspective d'un élément pour l'assemblage des deux parois telles qu'illustrées à la figure 6 ?
- la figure 7 est une vue en perspective d'un moule multiforme selon un cinquième mode de réalisation.

L'invention concerne un moule de cuisson, prévu pour la fabrication de produits de pâtisserie, tels que particulièrement des choux, notamment dans le domaine du prêt à garnir. Le moule de cuisson permet de fabriquer des produits de pâtisserie de forme déterminée, et par exemple de profil carré, triangulaire, hexagonal, en forme de coeur, d'étoile ou autres.

Selon l'invention, le moule 1 présente au moins une paroi de fond 2 et au moins une paroi latérale 3 ; 3₁, 3₂, 3₃, les parois dudit moule définissant au moins une forme 4 pour le produit de pâtisserie.

Il est à noter que ladite au moins une paroi latérale peut être prévue d'un seul tenant avec la paroi de fond, ou encore être prévue amovible afin de faciliter le démoulage des produits de pâtisserie, notamment des choux. En outre, le moule peut prévoir une paroi de couvercle 7 destinée à fermer le moule 1.

Avantageusement, au moins unedite paroi latérale 3 ; 3₁, 3₂, 3₃ est ajourée de telle façon à favoriser, d'une part, une bonne transmission interne de la chaleur, et d'autre part, l'évacuation des vapeurs et gaz de cuisson. Par exemple, ladite au moins une paroi latérale 3, 3₁, 3₂, 3₃ ajourée, présente une pluralité d'orifices circulaires 5, une pluralité de fentes 6 ou tout autre ouverture de forme quelconque répartie sur ladite paroi latérale.

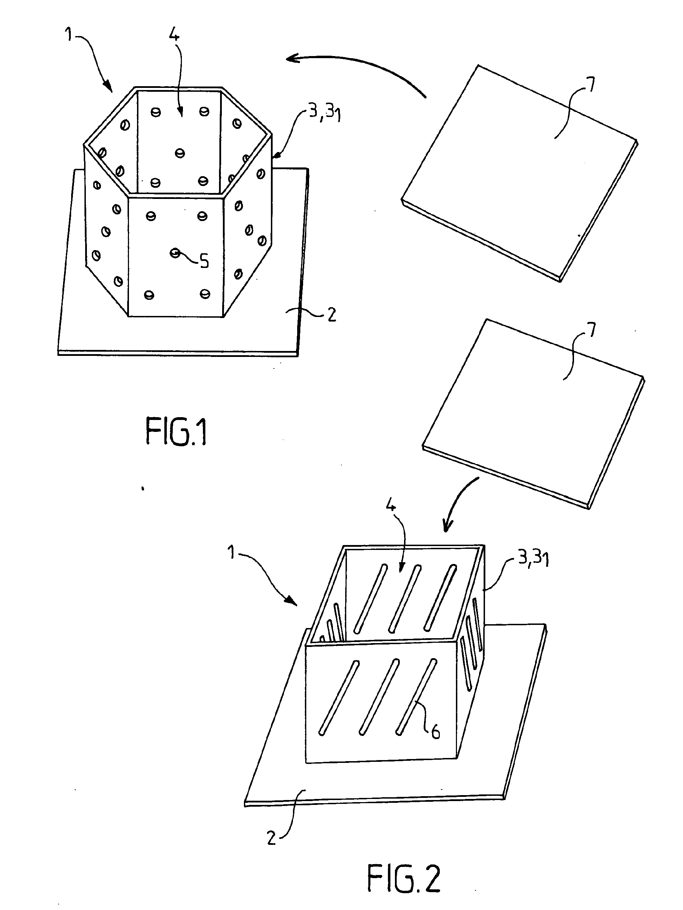

Tel qu'illustré à la figure 1, selon un exemple de réalisation, le moule 1 est constitué d'une paroi de fond 2 et d'une paroi latérale 3₁, amovible, de forme hexagonale. La paroi latérale 3₁ est réalisée d'un seul tenant par une bande d'acier inoxydable. La bande est préalablement percée d'orifices circulaires 5. Elle est ensuite conformée en hexagone après plusieurs pliages. Une paroi de couvercle 7 permet de fermer le moule 1.

Tel qu'illustré à la figure 2, selon un autre mode de réalisation, le moule est constitué d'une paroi de fond 2 et d'une paroi latérale 3₁, amovible, de profil carré, ajourée. La paroi latérale 3₁ est réalisée d'un seul tenant par une bande d'acier inoxydable sur laquelle sont préalablement réalisées des fentes 6, puis conformée en cube, après plusieurs pliages. Une paroi de couvercle 7 permet de fermer le moule.

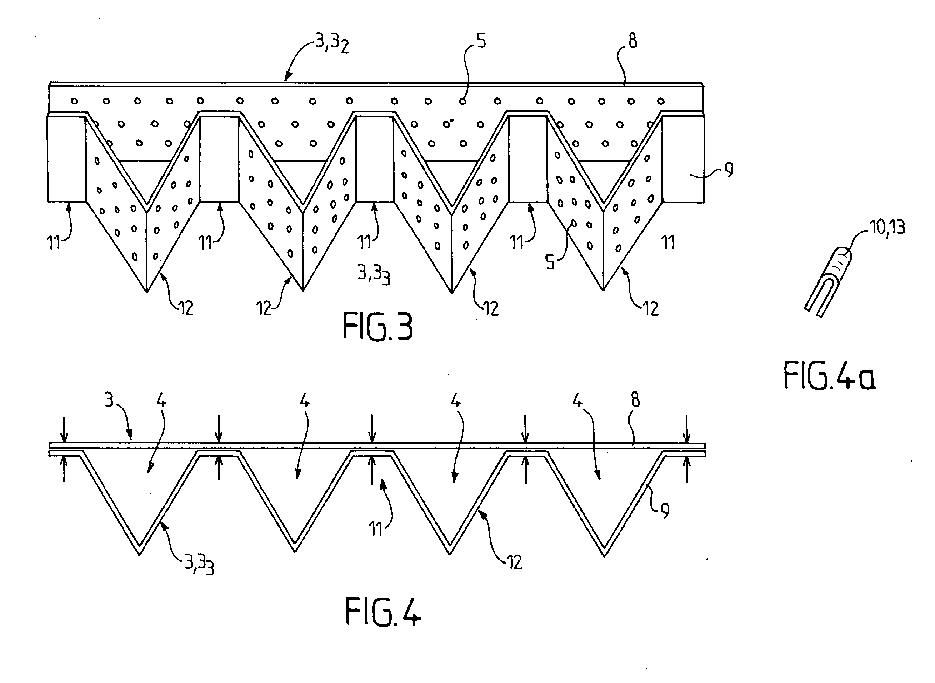

Selon un autre mode de réalisation illustré des figures 3 à 7, le moule est multiforme, constitué principalement par deux parois latérales 3₂, 3₃ ; 3₃, 3₃. Les parois latérales du moule sont constituées par deux bandes d'acier inoxydable 8, 9 ; 9, 9, ajourées. L'une 9 au moins des deux bandes est conformée par section 12 suivant un pas régulier pour définir, au moins partiellement plusieurs formes 4 pour des produits de pâtisserie. Ce moule multiforme présente, en outre des moyens d'assemblage 10 desdites bandes.

Ladite au moins une bande 9 d'acier inoxydable conformée peut alors présenter des sections planes 11, coplanaires, intercalées entre les sections 12 de bandes formées et/ou encore situées aux extrémités de ladite bande. Les moyens d'assemblage 10 peuvent notamment être constitués par des éléments en U 13 aptes à coopérer avec lesdites sections planes 11 pour maintenir les deux bandes 8, 9 ; 9, 9 d'acier inoxydable par chevauchement desdites bandes, notamment par pincement mutuel desdites bandes.

Tel qu'illustré selon l'exemple de réalisation des figures 3 et 4, le moule multiforme est constitué d'une bande d'acier inoxydable 8, plate, ajourée, notamment pourvue d'orifices circulaires pour constituer la paroi latérale 3₂, et d'autre part, par une bande d'acier inoxydable 9, conformée par section 12 suivant un pas régulier, partiellement en triangle. Entre chaque section 12 de bandes formées en triangle, ainsi qu'à ses extrémités, la bande 9 présente des sections planes 11, coplanaires, destinées à venir en appui contre la bande plate 8 lors de l'assemblage du moule multiforme. L'assemblage des bandes 8 et 9 est notamment réalisé au moyen d'éléments en U 13 aptes à coopérer avec lesdites sections planes 11 pour venir maintenir lesdites bandes entre elles par chevauchement desdites bandes, notamment par pincement mutuel.

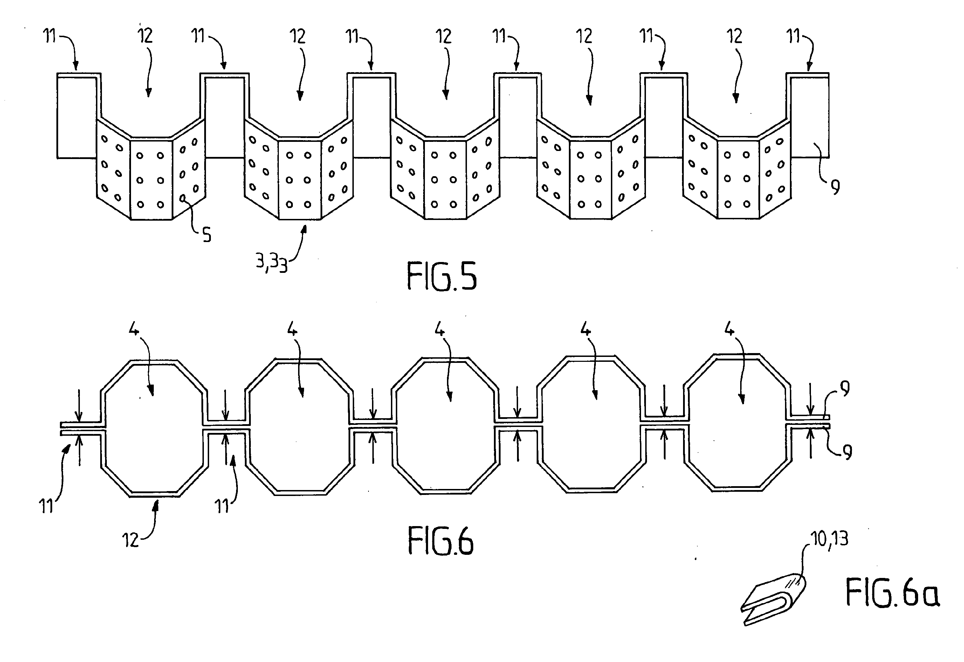

Tel qu'illustré selon l'exemple de réalisation du moule des figures 5 et 6, le moule multiforme est constitué par deux bandes d'acier inoxydable 9, identiques, notamment illustrées en un exemplaire à la figure 5. Cette bande 9 est conformée par section 12 suivant un pas régulier, en demi hexagone. Des sections planes 11 sont intercalées entre les sections 12 de bandes formées, ainsi que pourvues aux extrémités de la bande. Ces sections planes 11 sont coplanaires. Deux bandes identiques permettent, lorsqu'assemblées, telles qu'illustrées à la figure 6, d'obtenir un moule multiforme, de profil hexagonal. Les deux bandes 9 sont assemblées au moyen d'éléments en U venant chevaucher lesdites bandes 9 au niveau desdites sections planes 11 pour maintenir lesdites bandes, notamment par pincement mutuel.

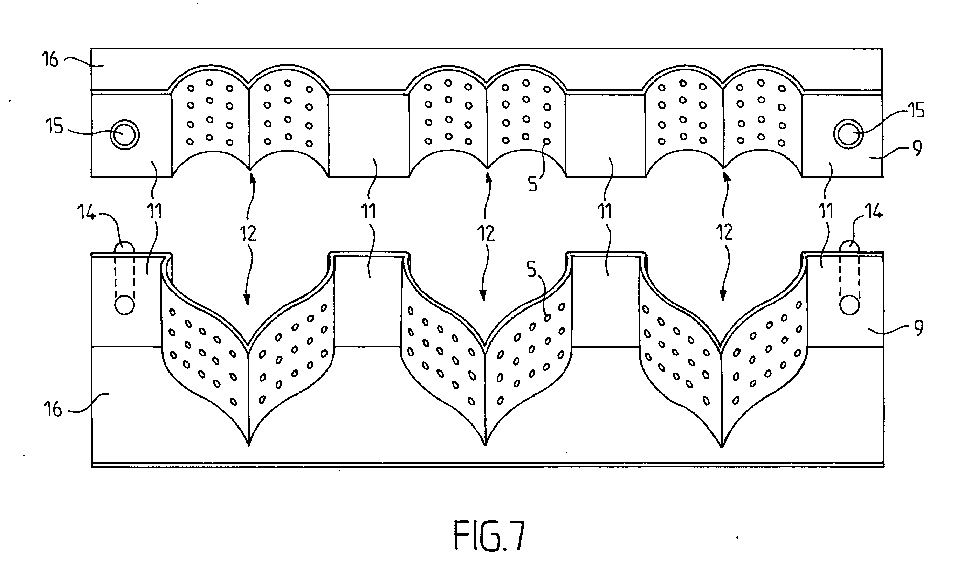

Tel qu'illustré selon l'exemple de réalisation de la figure 7, le moule multiforme est substantiellement constitué par deux bandes d'acier inoxydable 9. Les bandes sont conformées par section 12, suivant un pas régulier pour constituer des formes en coeur. Des sections planes 11 sont intercalées entre les sections 12 de bandes formées ainsi que pourvues aux extrémités de la bande. Ces sections planes sont coplanaires. En outre, les deux bandes 9 présentent un piétement 16 substantiellement constitué par une plaque inférieure, sensiblement perpendiculaire aux sections planes 11. Les sections planes 11 extrêmes des bandes sont respectivement pourvues de plots de centrage 14 et d'alésages correspondants 15. Lorsque les bandes sont assemblées, les plots de centrage 14 engagent avec les alésages 15 pour assurer la mise en coïncidence des sections 12 correspondantes des deux bandes. Les deux bandes 9 peuvent être assemblées au moyen d'éléments en U venant chevaucher lesdites bandes 9 au niveau desdites sections planes 11 intercalaires.

La ou les différentes formes 4 des moules 1, notamment des figures 1 à 7, peuvent être simplement remplies d'une quantité déterminée de pâte de produits à pâtisserie, notamment de pâte à choux, de telle façon que la pâte affleure les parois internes latérales du moule 1. Avantageusement, lors de la cuisson, lorsque le produit de pâtisserie lève, les ouvertures 5 ; 6 de ladite au moins une paroi latérale ajourée sont dimensionnées de telle façon à interdire un écoulement de la pâte dudit produit de pâtisserie à travers les ouvertures. Ainsi, en fin de cuisson, le produit de pâtisserie, notamment le chou, n'est pas enchevêtré avec ladite au moins une paroi latérale ajourée du moule. Le dimensionnement des ouvertures dépend de la rhéologie de la pâte de pâtisserie, notamment de la pâte à choux. Par exemple, les ouvertures peuvent être des orifices circulaires 5 dont le diamètre est compris entre 1 et 4 mm. De manière surprenante, le produit notamment, le chou ne prend pas le marquage des ouvertures 5, 6.

Le moule 1 pourra présenter, en outre, des moyens pour éviter le décollement de la paroi latérale 3 ; 3₁, 3₂, 3₃ par rapport à la paroi de fond 2 pendant la cuisson, notamment lorsque le produit lève. Selon un mode de réalisation avantageux, ces moyens pourront être constitués par des moyens de fixation de ladite au moins une paroi latérale 3 ; 3₁. 3₂, 3₃ sur la paroi de fond 2 dudit moule. Ces moyens de fixation, non illustrés, peuvent être notamment constitués par des systèmes vis/écrou, des éléments clipsables, ou tout élément similaire permettant le maintien de ladite paroi latérale à ladite paroi de fond.

Selon un autre mode de réalisation, les moyens pour éviter le décollement de la paroi latérale par rapport à la paroi de fond peuvent être simplement constitués par une masse gravitaire reposant sur la paroi de couvercle 7.

Il est à noter qu'avantageusement la paroi de fond 2 ainsi que la paroi de couvercle 7 du moule 1 pourront être constituées par de simples plaques de cuisson, notamment des tôles en acier inoxydable, couramment employées dans les cuisines, notamment dans le domaine de la pâtisserie.

Aussi, l'invention concerne également un kit de moulage pour la réalisation d'un moule de cuisson conforme à l'invention. Le kit comprend au moins une paroi latérale 3 ; 3₁ ; 3₂ ; 3₃, la ou les parois latérales définissant au moins une forme 4 pour une produit de pâtisserie, unedite paroi latérale étant ajourée. Cette paroi latérale pourra notamment être celle du moule illustré à la figure 1, à la figure 2, ou encore les parois latérales des moules multiformes des figures 3 à 7.

Notamment, le kit pourra comprendre au moins deux parois latérales 3₂, 3₃ ; 3₃ ; 3₃ , lesdites parois latérales du kit étant constituées par deux bandes d'acier inoxydable 8, 9 ; 9, 9, ajourées, l'une 9 au moins des deux bandes étant conformée par section 12 suivant un pas régulier pour définir, au moins partiellement, plusieurs formes pour des produits de pâtisserie, le kit présentant des moyens d'assemblage 10 desdites bandes.

La ou les parois du kit sont simplement posées sur une plaque de cuisson. La ou les différentes formes 4 pour les produits sont remplies d'une dose de pâte. Une deuxième plaque de cuisson sert de couvercle et ferme le moule. L'ensemble est alors prêt à être enfourné.

Naturellement, d'autres modes de mise en oeuvre, à la portée de l'homme de l'art, auraient pu être envisagés sans pour autant sortir du cadre de l'invention définie par les revendications ci-après.

## Revendications

1. Procédé de fabrication de choux dans le domaine du prêt à garnir, de formes déterminées, et par exemple, de formes carrées, triangulaires, hexagonales ou autres, à partir d'un moule de cuisson, ledit moule (1) présentant au moins une paroi de fond (2) et au moins une paroi latérale (3 ; 3₁; 3₂; 3₃), les parois dudit moule (1) définissant au moins une forme (4) pour le produit de pâtisserie, ladite au moins une paroi latérale (3 ; 3₁; 3₂,; 3₃) étant ajourée de telle façon à favoriser, d'une part, une bonne transmission interne de la chaleur, et d'autre part, l'évacuation des vapeurs et gaz de cuisson, procédé dans lequel :
- on remplit ladite au moins une forme de pâte à choux de telle façon que ladite pâte affleure ladite au moins une paroi latérale interne dudit moule,
- on procède à la cuisson de la pâte à choux.

2. Procédé selon la revendication 1, dans lequel on couvre le moule avec une paroi de couvercle lors de la cuisson.

3. Procédé selon la revendication 1 ou 2, dans lequel ladite au moins une paroi latérale (3 ; 3₁; 3₂; 3₃) ajourée présente une pluralité d'orifices circulaires (5), une pluralité de fentes (6) ou toutes autres ouvertures de formes quelconques réparties sur ladite paroi latérale

4. Moule de cuisson trouvant notamment une application particulière dans le domaine du prêt à garnir pour la mise en oeuvre du procédé de fabrication de choux selon la revendication 1 ou 2, **caractérisé en ce que** le moule (1) est multiforme, constitué au moins par deux parois latérales (3₂; 3₃; 3₃; 3₃) et une paroi de fond (2), lesdites parois latérales du moule étant constituées par deux bandes d'acier inoxydable (8, 9 ; 9, 9), ajourées, l'une (9) au moins des deux bandes étant conformée par section (12) suivant un pas régulier pour définir, au moins partiellement plusieurs formes (4) pour des produits de pâtisserie, ledit moule (1) présentant des moyens d'assemblage (10) desdites bandes, et dans lequel lesdites bandes, une fois assemblées, définissent plusieurs formes pour la réalisation de plusieurs produits de pâtisserie.

5. Moule selon la revendication 4, dans lequel ladite au moins une bande (9) d'acier inoxydable conformée présente des sections planes (11), coplanaires, intercalées entre les sections (12) de bandes formées, et/ou encore situées aux extrémités de ladite bande, lesdits moyens d'assemblage (10) étant constitués par des éléments en U (13) aptes à coopérer avec lesdites sections planes (11) pour maintenir les deux bandes (8, 9 ; 9, 9) d'acier inoxydable par chevauchement.

6. Moule selon la revendication 4 ou 5, dans lequel les deux bandes d'acier inoxydable (8, 9 ; 9, 9) sont respectivement pourvues de plots de centrage (14) et d'alésages (15) correspondant.

7. Moule selon l'une quelconque des revendications 4 à 6, dans lequel les deux bandes présentent un piétement (16)

8. Moule selon l'une des revendications 4 à 7, dans lequel ladite paroi latérale (3 ; 3₁ ; 3₂ ; 3₃) ajourée présente une pluralité d'orifices circulaires (5), une pluralité de fentes (6) ou toutes autres ouvertures de formes quelconques réparties sur ladite paroi latérale.

9. Moule selon l'une des revendications 4 à 8, présentant, en outre, une paroi de couvercle (7) destinée à fermer ledit moule.

10. Moule selon l'une des revendications 4 à 9, présentant des moyens pour éviter le décollement de la paroi latérale (3 ; 3₁; 3₂; 3₃) par rapport à la paroi de fond (2) pendant la cuisson, ces derniers étant constitués par des moyens de fixation desdites parois latérales (3 ; 3₁; 3₂; 3₃) sur la paroi de fond (2) dudit moule (1).
